# EUROPÄISCHE PATENTSCHRIFT

(11) **EP 1 401 619 B1**
(45) Veröffentlichungstag und Bekanntmachung des Hinweises auf die Patenterteilung: **29.03.2006**
(21) Anmeldenummer: 02737946.0
(22) Anmeldetag: 11.04.2002
(51) Int. Cl.: B26D 7/30

(54) **AUFSCHNEIDEVERFAHREN UND -VORRICHTUNG**
SLICING METHOD AND DEVICE
PROCEDE ET DISPOSITIF DE DECOUPAGE

(30) Priorität: 29.06.2001 DE 10131701
(43) Veröffentlichungstag der Anmeldung: 31.03.2004
(73) Patentinhaber: Weber Maschinenbau GmbH & Co. Kg, 35236 Breidenbach (DE)
(72) Erfinder: WEBER, Günther, 17033 Neubrandenburg (DE)
(74) Vertreter: Manitz, Finsterwald & Partner GbR
(86) Internationale Anmeldenummer: PCT/EP2002/004058
(87) Internationale Veröffentlichungsnummer: WO 2003/004228

(56) Entgegenhaltungen:
- EP-A- 1 046 478
- WO-A-95/21375
- DE-A- 19 906 021
- GB-A- 2 187 281
- JP-A- 9 029 693
- SE-B- 341 919
- US-A- 4 908 703

## Beschreibung

Die Erfindung betrifft ein Verfahren zum Aufschneiden von Lebensmittelprodukten mit ungleichmäßiger Innenstruktur, wie z.B. Wurst oder Schinken, bei dem die Produkte in Scheiben geschnitten und insbesondere geschindelte Portionen oder Stapelportionen gebildet und aus dem Aufschneidebereich abtransportiert werden, und bei dem während des Aufschneidens mittels einer optoelektronischen Erfassungseinrichtung in aufeinanderfolgenden Erfassungsvorgängen Informationen über die Kontur und die Struktur der Produktscheiben gewonnen werden, indem der Aufschneidebereich ausgeleuchtet und von den Schnittflächen der jeweils vom Produkt abzutrennenden Scheiben und aus dem Randbereich der Scheiben reflektierte Ausleuchtstrahlung nachgewiesen und ausgewertet wird.

Die Erfindung betrifft außerdem eine Vorrichtung zum Aufschneiden von Lebensmittelprodukten mit ungleichmäßiger Innenstruktur, wie z.B. Wurst oder Schinken, mit der die Produkte in Scheiben geschnitten und insbesondere geschindelte Portionen oder Stapelportionen gebildet und aus dem Aufschneidebereich abtransportiert werden, mit einer wenigstens eine Strahlungsquelle umfassenden Beleuchtungseinrichtung zum Ausleuchten des Aufschneidebereiches, einer Nachweiseinrichtung für von den Schnittflächen der jeweils vom Produkt abzutrennenden Scheiben und aus dem Randbereich der Scheiben reflektierte Ausleuchtstrahlung, und einer Auswerteeinrichtung zum Auswerten der nachgewiesenen Strahlung.

In der Praxis wird meist gefordert, dass die beim Aufschneiden von Lebensmittelprodukten erzeugten Scheiben oder die aus den Scheiben gebildeten Portionen zumindest innerhalb bestimmter Toleranzgrenzen ein konstantes vorgegebenes Gewicht aufweisen. Das Gewicht kann durch Verändern der Scheibendicke an der Schneidemaschine eingestellt werden, wobei es jedoch zu nicht mehr tolerierbaren Abweichungen insbesondere dann kommen kann, wenn - wie es in der Praxis meistens der Fall ist - die Produkte eine über die Produktlänge ungleichmäßige Innenstruktur mit Produktanteilen unterschiedlicher Dichte und/oder eine über die Produktlänge variierende Querschnittsform aufweisen. Diese Üngleichmäßigkeiten können prinzipiell durch Verändern der Scheibendicke während des Aufschneidens korrigiert werden. Hierzu benötigt man Informationen über die Kontur und über die Struktur des Produktes bzw. der Produktscheiben.

Aus der DE 199 06 021 A1 ist es bekannt, mit Hilfe eines flächig entlang der Längsrichtung des Produktes angeordneten Beleuchtungskörpers die Umgebung der Produktstirnfläche auszuleuchten und mittels einer optischen Erkennungseinrichtung die Kontur der Stirnfläche aufgrund des Kontrastes zwischen der Stirnfläche und deren Umgebung zu erfassen. Die DE 199 06 021 A1 beschreibt auch die Anordnung einer Zusatzbeleuchtung vor der Stirnfläche, um deren Struktur bestimmen zu können.

Bei dieser bekannten Anordnung darf die Stirnfläche des Produktes nicht zu stark beleuchtet werden, da ansonsten der mittels der Umgebungsbeleuchtung erzielte Kontrast wieder so weit reduziert wird, dass eine Konturbestimmung mittels der optischen Erkennungseinrichtung nicht mehr mit ausreichender Genauigkeit möglich ist. Obwohl die bekannte Anordnung in vielen Anwendungsfällen gute Ergebnisse liefert, können Probleme insbesondere dann entstehen, wenn zur Bestimmung der Scheibenstruktur eine starke Aufhellung der Schnittflächen erforderlich ist, um einen ausreichend hohen Kontrast zwischen verschiedenen Produktanteilen zu erzeugen.

Aufgabe der Erfindung ist es, diese bekannte Lösung zu verbessern und ein Verfahren sowie eine Vorrichtung der eingangs genannten Art zu schaffen, die es ermöglichen, für beliebige aufzuschneidende Produkte sowohl die Kontur als auch die Struktur der jeweils abzutrennenden Produktscheiben mit möglichst hoher Genauigkeit während des Aufschneidevorgangs zu bestimmen.

Die Lösung dieser Aufgabe erfolgt zum einen durch die Merkmale der Verfahrensansprüche 1, 2 und 3.

Die Lösung der der Erfindung zugrundeliegenden Aufgabe erfolgt außerdem durch die Merkmale der vorrichtungsansprüche 20, 21 und 22.

Erfindungsgemäß umfasst die Ausleuchtung mehrere richtungsunabhängige Komponenten. Die Ausleuchtkomponenten können sich beispielsweise hinsichtlich der verwendeten Wellenlänge oder des verwendeten Wellenlängenbereiches und/oder hinsichtlich der Intensität der verwendeten Strahlung bzw. der im jeweils ausgeleuchteten Bereich erzeugten Beleuchtungsstärke voneinander unterscheiden. Alternativ oder zusätzlich kann ein Unterschied in den Polarisationseigenschaften der verwendeten Strahlung bestehen. Des weiteren können die Ausleuchtkomponenten gleichzeitig oder zeitlich nacheinander durchgeführt werden, d.h. der oder ein unterscheidender Ausleuchtparameter ist hier der Zeitpunkt, an dem die Ausleuchtkomponenten jeweils durchgeführt werden.

Ferner können die Ausleuchtkomponenten entweder aus einer einzigen Richtung und insbesondere mittels einer einzigen Strahlungsquelle oder aus verschiedenen Richtungen und insbesondere mittels mehrerer räumlich voneinander getrennter Strahlungsquellen durchgeführt werden.

Durch die erfindungsgemäße Aufteilung der Ausleuchtung auf mehrere richtungsunabhängige Komponenten können diese individuell eingestellt und gezielt auf den jeweiligen Anwendungsfall abgestimmt werden, um insgesamt einen für die Kontur- und Strukturerfassung der Produktscheiben ausreichenden Kontrast zwischen der Schnittfläche und deren Randbereich einerseits und zwischen verschiedenen Produktanteilen auf der Schnittfläche andererseits zu erzeugen.

Bei Verwendung verschiedener Wellenlängen beispielsweise kann mit Strahlung einer Wellenlänge die Schnittfläche so weit aufgehellt werden, dass sie sich in einer zur Konturerfassung ausreichenden Weise von der dunkleren Umgebung abhebt. Für diese Konturerfassung kann die Strahlungsintensität ohne Rücksicht auf die Strukturerfassung grundsätzlich beliebig groß gewählt werden, da für die Strukturerfassung Strahlung mit einer anderen Wellenlänge verwendet wird, die wiederum gezielt auf die Produktanteile abgestimmt werden kann.

Des weiteren kann erfindungsgemäß die zur Strukturerfassung erfolgende Ausleuchtung der Schnittfläche wiederum in einzelne Ausleuchtkomponenten aufgeteilt werden. Diese Komponenten können z.B. ebenfalls verschiedene Wellenlängen aufweisen, die jeweils gezielt auf einen Produktanteil abgestimmt sind, um einen besonders guten Kontrast zwischen den Produktanteilen zu erzeugen, so dass die Produktanteile beim Nachweis bzw. bei der Auswertung der aus dem Aufschneidebereich reflektierten Strahlung voneinander unterschieden werden.

So kann beispielsweise zur Unterscheidung zwischen Fettanteilen und Mageranteilen rotes Licht für den Mageranteil und blaues Licht für den Fettanteil verwendet werden, während z.B. gelbes Licht für die zur Erfassung der Scheibenkontur vorgesehene Ausleuchtkomponente eingesetzt wird.

Bei der gleichzeitigen Durchführung einiger oder aller Ausleuchtkomponenten erfolgen die Konturerfassung und die Strukturerfassung an derselben Produktscheibe. Vorzugsweise wird beim Aufschneiden des Produktes an jeder Scheibe ein Erfassungsvorgang durchgeführt.

Im Fall von gleichzeitig durchgeführten Ausleuchtkomponenten, die sich z.B. hinsichtlich der Wellenlänge und/oder hinsichtlich der Intensität der verwendeten Strahlung bzw. der im Aufschneidebereich erzeugten Beleuchtungsstärke voneinander unterscheiden, kann der Nachweis der reflektierten Strahlung mittels eines einzigen Sensors erfolgen, der die verschiedenen Wellenlängen trennen kann und beispielsweise in Form einer Farbkamera vorgesehen ist. Die Nachweiseinrichtung kann auch mehrere Einzelsensoren umfassen, die jeweils für den Nachweis von Strahlung einer bestimmten Wellenlänge bzw. eines bestimmten Wellenlängenbereiches vorgesehen sind. Als derartige Einzelsensoren können z.B. mit geeigneten Filtereinrichtungen versehene Schwarz/Weiß-Kameras vorgesehen werden.

Alternativ können einige oder alle Komponenten der Ausleuchtung zeitlich nacheinander durchgeführt werden. Hierbei kann z.B. eine einzige Strahlungsquelle verwendet werden, die in der Lage ist, die Strahlung für die einzelnen Ausleuchtkomponenten in sehr kurzen. Zeitabständen zu emittieren. Beispielsweise kann eine gepulste Strahlungsquelle eingesetzt werden, mit welcher der Aufschneidebereich nacheinander mit Strahlung verschiedener Wellenlängen und/oder Intensitäten beaufschlagt werden kann.

Für den Nachweis der aus dem Aufschneidebereich reflektierten Strahlung kann dabei z.B. ein einziger Sensor eingesetzt werden, der entsprechend der zeitlichen Abfolge der Ausleuchtkomponenten betrieben und insbesondere mit der durch die Strahlungsquelle vorgegebenen Wiederholungsrate ausgelesen werden kann. Bei einer derartigen Synchronisation zwischen Ausleuchtung und Strahlungsnachweis, d.h. zwischen Sender und Empfänger, können während eines Erfassungsvorgangs mehrere jeweils einer Ausleuchtkomponente zugeordnete Aufnahmen gemacht werden.

Die aus den Einzelaufnahmen gewonnenen Teilinformationen können anschließend ausgewertet und zu einer Gesamtinformation über sowohl Kontur als auch Struktur der Produktscheiben zusammengesetzt werden.

Anstelle eines einzigen Sensors können zum Nachweis der reflektierten Strahlung auch mehrere Einzelsensoren eingesetzt werden, die entsprechend der zeitlichen Abfolge der Ausleuchtkomponenten nacheinander ausgelesen werden.

Wenn die einzelnen Ausleuchtkomponenten eines Erfassungsvorgangs zeitlich nacheinander durchgeführt werden, dann kann dies in einer Variante der Erfindung für jeden Erfassungsvorgang an einer einzigen Produktscheibe erfolgen, d.h. Kontur- und Strukturerfassung erfolgen jeweils an einer einzigen Produktscheibe. Für das Aussenden der den einzelnen Ausleuchtkomponenten zugeordneten Strahlung und für deren Nachweis steht hierbei vergleichsweise wenig Zeit zur Verfügung, so dass insbesondere bei Hochleistungsschneidemaschinen für eine relativ schnelle Bildverarbeitung oder zumindest für eine schnell Speicherung der mit der Nachweiseinrichtung aufgenommenen Bilddaten gesorgt werden muss.

Alternativ kann jeder Erfassungsvorgang mehrere Produktscheiben umfassen. Die einzelnen Ausleuchtkomponenten werden hierbei zeitlich nacheinander durchgeführt und dabei auf verschiedene und insbesondere auf unmittelbar aufeinanderfolgende Produktscheiben verteilt. So können beispielsweise an einer Produktscheibe Informationen über deren Struktur und an einer anderen Produktscheibe Informationen über deren Kontur gewonnen werden.

Die Erfassung der Scheibenstruktur kann dabei wiederum auf mehrere aufeinanderfolgende Scheiben aufgeteilt werden. Wenn mit Ausleuchtstrahlung verschiedener Wellenlängen gearbeitet wird, dann kann z.B. in einer ersten Ausleuchtkomponente zur Konturerfassung mit gelbem Licht für einen ausreichenden Kontrast zwischen der Schnittfläche und dem Randbereich gesorgt werden, während an der nächsten Scheibe mit rotem Licht der Mageranteil und an der übernächsten Scheibe mit blauem Licht der Fettanteil des Produkts hervorgehoben wird. Die an den drei Produktscheiben gewonnenen Teilinformationen werden bei der Auswertung zu einer Gesamtinformation zusammengesetzt. Dabei wird für jede an einer der Scheiben gewonnene Teilinformation angenommen, dass diese auch für die beiden anderen Scheiben gegeben, d.h. über die dem jeweiligen Erfassungsvorgang zugeordneten Scheiben konstant ist. Die einzelnen Produktscheiben eines Erfassungsvorgangs werden insofern wie eine einzige Scheibe betrachtet.

In einer besonders bevorzugten Ausführungsform der Erfindung ist vorgesehen, dass zur Erzeugung des Kontrastes zwischen der Schnittfläche und deren Randbereich in letzterem eine höhere Beleuchtungsstärke als auf der Schnittfläche erzeugt wird.

Bei dieser auch als inverse Ausleuchtung bezeichneten Beleuchtung des Aufschneidebereiches erscheint die Schnittfläche gegenüber dem Randbereich als eine dunkle Fläche. Bei der Aufhellung der Schnittfläche zur Erzeugung eines ausreichenden Kontrastes zwischen den verschiedenen Produktanteilen kann die Strahlungsintensität ohne Rücksicht auf die für die Beleuchtung des Randbereiches vorgesehene Ausleuchtkomponente grundsätzlich beliebig groß gewählt werden, wenn sich die Ausleuchtkomponenten hinsichtlich eines Ausleuchtparameters voneinander unterscheiden, so dass beim Nachweis bzw. bei der Auswertung der insgesamt aus dem Aufschneidebereich reflektierten Strahlung zwischen den einzelnen Ausleuchtkomponenten unterschieden werden kann.

Vorzugsweise wird bei der Ausleuchtung mit Strahlung im für das menschliche Auge sichtbaren Wellenlängenbereich gearbeitet. Grundsätzlich können einige oder alle Ausleuchtkomponenten alternativ auch mit nicht sichtbarer Strahlung durchgeführt werden.

Die erfindungsgemäße Vorrichtung umfasst vorzugsweise zur Ausleuchtung des Randbereiches der Produktscheiben einen Leuchtrahmen oder Leuchttunnel, wie er beispielsweise in der eingangs erwähnten DE 199 06 021 A1 beschrieben ist.

Bevorzugt ist zusätzlich zu dem Leuchtrahmen oder Leuchttunnel wenigstens eine im vor dem Aufschneidebereich gelegenen Halbraum angeordnete Strahlungsquelle vorgesehen. Diese Strahlungsquelle kann unterhalb der Produktauflage angeordnet sein und weist bevorzugt eine langgestreckte, quer zur Produktförderrichtung verlaufende Form auf.

Alternativ ist es erfindungsgemäß auch möglich, dass die Beleuchtungseinrichtung ausschließlich Strahlungsquellen umfasst, die im vor dem Aufschneidebereich gelegenen Halbraum angeordnet sind. Dabei können mehrere räumlich voneinander getrennte Strahlungsquellen vorgesehen sein. Auch die Verwendung lediglich einer einzigen Strahlungsquelle ist möglich.

Weitere bevorzugte Ausführungsformen sowohl des erfindungsgemäßen Aufschneideverfahrens als auch der erfindungsgemäßen Aufschneidevorrichtung sind in den Ansprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine schematische Seitenansicht einer Aufschneidevorrichtung gemäß einer Ausführungsform der Erfindung,
- Fig. 2: schematisch eine Frontansicht des Aufschneidebereiches der Vorrichtung von Fig. 1, und
- Fig. 3: ein Diagramm zur Erläuterung erfindungsgemäßer Aufschneideverfahren.

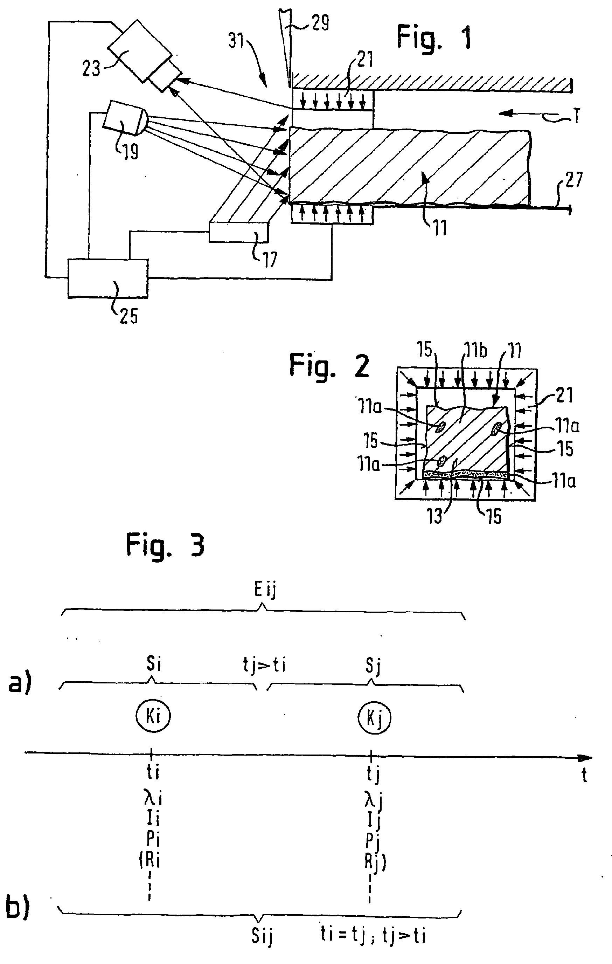

Die in Fig. 1 und 2 dargestellte erfindungsgemäße Vorrichtung umfasst eine Maschine zum Aufschneiden von Lebensmittelprodukten 11, von der lediglich schematisch ein Produktzufuhrbereich mit einer Produktauflagefläche 27 sowie ein Schneidmesser 29 dargestellt sind, sowie eine optoelektronische Erfassungseinrichtung 17, 19, 21, 23, 25 zur Ausleuchtung des Aufschneidebereiches 31 und zum Nachweis sowie zur Auswertung von aus dem Aufschneidebereich 31 reflektierter elektromagnetischer Strahlung.

Das Produkt 11, z.B. Wurst oder Schinken in Laibform, wird mittels einer Vorschubeinrichtung in einer Förderrichtung T in Richtung des Aufschneidebereiches 31 vorgeschoben. Mittels des Schneidmessers 29 werden in schneller Folge Scheiben vom Produkt 11 abgetrennt, aus denen Portionen gebildet werden, die anschließend aus dem Aufschneidebereich 31 abtransportiert werden. Der Übersichtlichkeit halber sind die Einrichtungen zur Portionsbildung und zum Abtransport der Portionen in Fig. 1 und 2 nicht dargestellt.

In Fig. 1 ist angedeutet, dass die Außenkontur des Produkts 11 über dessen Länge variiert, während Fig. 2 Produktanteile 11a, 11b unterschiedlicher Dichte zeigt - z.B. Fett einerseits und Magerfleisch andererseits -, die bei über die Produktlänge variierender Verteilung eine unregelmäßige Produktstruktur zur Folge haben.

Die optoelektronische Erfassungseinrichtung umfasst eine Beleuchtungseinrichtung mit mehreren Strahlungsquellen 17, 19, 21, eine Nachweiseinrichtung 23 z.B. in Form einer Farbkamera zum Nachweis der reflektierten Strahlung sowie eine zentrale Steuer- und Auswerteeinrichtung 25, die mit den Strahlungsquellen 17, 19, 21 sowie mit der Nachweiseinrichtung 23 verbunden ist und mit der die einzelnen Komponenten entsprechend dem jeweiligen Erfassungsverfahren angesteuert bzw. ausgelesen sowie die aufgenommenen Bilder bzw. Bilddaten gespeichert, verarbeitet und ausgewertet werden, um die Kontur und die Struktur des Produkts 11 während des Aufschneidens zu bestimmen. Mit den gewonnenen Kontur- und Strukturdaten können dann bestimmte Betriebsparameter der Aufschneidemaschine, z.B. die Scheibendicke, online während des Aufschneidens beispielsweise durch Ansteuerung entsprechender Stellglieder verändert werden, um z.B. das Gewicht von aus den abgetrennten Scheiben zu bildenden Scheibenportionen innerhalb vorgegebener Grenzen konstant zu halten. Auf Änderungen der Produktkontur und -struktur während des Aufschneidens kann folglich sofort reagiert werden.

Zwei Strahlungsquellen 17, 19 sind frontseitig im vor dem Aufschneidebereich 31 gelegenen Halbraum angeordnet, wobei die eine Strahlungsquelle 17 unterhalb der Produktauflagefläche 27 in vergleichsweise geringem Abstand zur Schneidebene angeordnet ist. Die andere Strahlungsquelle 19 befindet sich oberhalb der Produktauflagefläche 27 in einem größeren Abstand zur Schneidebene.

Eine weitere Strahlungsquelle 21 ist als das Produkt 11 vollständig umgebender Leuchtrahmen ausgebildet (vgl. insbesondere Fig. 2), der sich in Produktförderrichtung T bis kurz vor die Schneidebene erstreckt und einen Leuchttunnel für das aufzuschneidende Produkt 11 bildet. Mit dem Leuchtrahmen 21 wird das Produkt 11 von allen Seiten beleuchtet, wodurch die Umgebung bzw. der Randbereich 15 der jeweils vom Produkt 11 abzutrennenden Scheibe, deren vordere Schnittfläche 13 in Fig. 2 dargestellt ist, ausgeleuchtet wird.

Die Fig. 1 und 2 zeigen lediglich eine mögliche Ausgestaltung der Beleuchtungseinrichtung. Die Anzahl der Strahlungsquellen und deren räumliche Anordnung ist grundsätzlich beliebig. So kann beispielsweise auf den Leuchtrahmen 21 verzichtet und die Ausleuchtung des Aufschneidebereiches 31 ausschließlich mittels frontseitig angeordneter Strahlungsquellen erfolgen. Dabei kann als einzige Strahlungsquelle die unterhalb der Auflagefläche 27 nahe der Schneidebene angeordnete Strahlungsquelle 17 vorgesehen sein, die z.B. als sich quer zur Produktförderrichtung T erstreckender Leuchtstab oder als Leuchtleiste ausgebildet ist.

In der bevorzugten Anordnung ist allerdings ein Leuchtrahmen oder -tunnel 21 in Verbindung mit einer oder mehreren frontseitigen Strahlungsquellen 17, 19 vorgesehen. Der Leuchtrahmen 21 ermöglicht eine sogenannte inverse Ausleuchtung des Aufschneidebereiches 31 bzw. der Umgebung 15 der abzutrennenden Produktscheiben, bei der sich - bezogen auf die beim Leuchtrahmen 21 verwendete Wellenlänge - die Schnittfläche 13 des Produktes 11 als relativ dunkle Fläche von dem helleren Randbereich 15 abhebt und zwischen der Schnittfläche 13 und dem Randbereich 15 ein vergleichsweise starker Kontrast erzeugt wird, der eine sichere Erfassung der Kontur des unregelmäßig geformten Produktes 11 mittels der Nachweiseinrichtung 23 ermöglicht.

Für die Strahlungsquellen 17, 19, 21 können grundsätzlich beliebige Beleuchtungsvorrichtungen eingesetzt werden, die entweder sichtbares Licht oder im für das menschliche Auge unsichtbaren Wellenlängenbereich liegende Strahlung emittieren. Es kommen sowohl dauerhaft als auch gepulst betriebene Beleuchtungsvorrichtungen in Frage. Besonders bevorzugt ist der Einsatz von LEDs. Ferner können die Strahlungsquellen beweglich, z.B. verschwenkbar oder verfahrbar, ausgestaltet sein, um die Beleuchtungsrichtung verändern und dadurch optimal an die jeweiligen Gegebenheiten anpassen zu können. Die Strahlungsquellen können jeweils als Ganzes bewegbar sein, oder einzelne Leuchtelemente, wie z.B. LEDs, der Strahlungsquellen können unabhängig voneinander bewegt werden. Die Bewegung der Strahlungsquellen kann automatisch erfolgen. So kann z.B. mittels einer Regeleinrichtung eine selbstanpassende Ausleuchung realisiert werden, die in der Lage ist, auf sich verändernde Umgebungsbedingungen zu reagieren.

Zur Unterscheidung verschiedener Ausleuchtwellenlängen können anstelle einer Farbkamera auch mehrere Schwarz/Weiß-Kameras verwendet werden, die jeweils mit einer entsprechend angepassten Filtereinrichtung versehen sind.

Anhand von Fig. 3 werden im folgenden verschiedene Möglichkeiten zur Durchführung eines erfindungsgemäßen Ausleuchtverfahrens erläutert, bei dem die vorstehend beschriebene Vorrichtung eingesetzt werden kann.

Beim Aufschneiden eines Produktes werden nacheinander eine Mehrzahl von einzelnen Erfassungsvorgängen durchgeführt. Jeder Erfassungsvorgang Eij umfasst wiederum mehrere Ausleuchtkomponenten, wobei im dargestellten Beispiel eine zum Zeitpunkt ti erfolgende Komponente Ki und eine zum Zeitpunkt tj erfolgende Komponente Kj vorgesehen sind. Grundsätzlich können beliebig viele Ausleuchtkomponenten jeweils einen Erfassungsvorgang bilden.

In der Variante (a) werden die Ausleuchtkomponenten Ki, Kj an verschiedenen und vorzugsweise unmittelbar aufeinanderfolgenden Produktscheiben Si, Sj durchgeführt, d.h. es gilt tj > ti. Möglich ist aber auch die Variante (b), in der die Komponenten Ki, Kj an derselben Produktscheibe Sij durchgeführt werden, d.h. der Erfassungsvorgang Eij umfasst nicht mehrere Produktscheiben, sondern lediglich eine einzige Produktscheibe Sij. Dabei können die Ausleuchtkomponenten Ki, Kj entweder zeitlich nacheinander (tj > ti) oder gleichzeitig durchgeführt werden, so dass ti = tj.

Die Ausleuchtkomponenten Ki, Kj unterscheiden sich voneinander zumindest hinsichtlich eines Ausleuchtparameters, und zwar beispielsweise hinsichtlich der Wellenlänge λ, der Intensität I und/oder der Polarisationseigenschaften der verwendeten Strahlung. Bei gleicher Intensität der Strahlungsquellen können sich die Ausleuchtkomponenten prinzipiell auch durch die im jeweils ausgeleuchteten Bereich erzeugte Beleuchtungsstärke voneinander unterscheiden, die außer von der Strahlungsintensität auch von anderen Umständen abhängig sein kann.

Ferner können sich die Ausleuchtkomponenten Ki, Kj hinsichtlich der Richtung R unterscheiden, aus der die jeweils verwendete Ausleuchtstrahlung den Aufschneidebereich beaufschlagt, wobei in Fig. 3 dieser Ausleuchtparameter in Klammern gesetzt ist, da bei den bevorzugten Varianten des erfindungsgemäßen Verfahrens eine Unterscheidung der Ausleuchtkomponenten Ki, Kj ausschließlich durch die Beleuchtungsrichtung R nicht vorgesehen ist, obwohl prinzipiell erfindungsgemäß die Beleuchtungsrichtung der einzige unterscheidende Ausleuchtparameter sein kann.

Des weiteren ist es erfindungsgemäß möglich, dass sich die Ausleuchtkomponenten Ki, Kj bei gleicher Wellenlänge λ, gleicher Intensität I bzw. erzeugter Beleuchtungsstärke und gleichen Polarisationseigenschaften ausschließlich durch den Zeitpunkt t ihrer Durchführung voneinander unterscheiden.

In eine besonders bevorzugten erfindungsgemäßen Variante umfasst jeder Erfassungsvorgang zwei unmittelbar aufeinanderfolgende Produktscheiben, wobei an jeder Produktscheibe eine Ausleuchtkomponente durchgeführt wird und sich die Ausleuchtkomponenten ausschließlich hinsichtlich der Intensität der verwendeten Strahlung bzw. der damit erzeugten Beleuchtungsstärke voneinander unterscheiden. Dabei erfolgt ausschließlich eine Frontalbeleuchtung mit einer oder mehreren frontseitig im vor dem Ausschneidebereich gelegenen Halbraum angeordneten Strahlungsquellen. An der ersten Scheibe wird jeweils mit einer vergleichsweise hohen Strahlungsintensität bzw. Beleuchtungsstärke die Scheibenkontur bestimmt, während zur Erfassung der Produktstruktur die Beleuchtung der Schnittfläche an der zweiten Produktscheibe mit einer geringeren Intensität bzw. Beleuchtungsstärke erfolgt. Kontur und Struktur werden also an verschiedenen Produktscheiben ermittelt und jeweils über zwei aufeinanderfolgende Scheiben als konstant angenommen.

In einer weiteren besonders bevorzugten Variante der Erfindung wird alternativ oder zusätzlich zu der vorstehend erläuterten Intensitäts- bzw. Beleuchtungsstärkenvariation jeweils von Produktscheibe zu Produktscheibe die Wellenlänge der verwendeten Strahlung verändert. So kann beispielsweise derart mit verschiedenfarbigem Licht gearbeitet werden, dass an einer ersten Scheibe gelbes Licht zur Konturbestimmung und anschließend zur Strukturbestimmung zunächst an einer Scheibe blaues Licht für einen Produktanteil (beispielsweise Fett) und an der nächsten Scheibe rotes Licht für einen anderen Produktanteil (beispielsweise Magerfleisch) eingesetzt wird.

In einer weiteren bevorzugten erfindungsgemäßen Variante wird wiederum mit verschiedenen Wellenlängen gearbeitet, wobei jedoch in jedem Erfassungsvorgang alle Ausleuchtkomponenten gleichzeitig und damit an derselben Produktscheibe durchgeführt werden. Als Nachweiseinrichtung für die aus dem Aufschneidebereich reflektierte Strahlung dient beispielsweise eine Farbkamera, oder es werden mehrere Einzelsensoren eingesetzt, z.B. jeweils mit einer Filtereinrichtung versehene Schwarz/Weiß-Kameras. In dieser Variante werden somit nicht wie bei den vorstehend erläuterten Beispielen für jeden Erfassungsvorgang mehrere Bilder an verschiedenen Scheiben aufgenommen, sondern jeder Erfassungsvorgang beinhaltet die Aufnahme eines einzigen Bildes an einer Produktscheibe.

Gemäß einer weiteren bevorzugten Variante der Erfindung können in jedem Erfassungsvorgang an einer einzigen Scheibe mehrere Bilder aufgenommen werden, wobei jedem Bild eine Ausleuchtkomponente zugeordnet ist und sich die Ausleuchtkomponenten durch einen oder mehrere Ausleüchtparameter, insbesondere durch die Wellenlänge und/oder durch die Intensität der verwendeten Strahlung bzw. der damit erzeugten Beleuchtungsstärke, voneinander unterscheiden können. Im Vergleich zu der vorstehend erläuterten Variante wird hier mit einer höheren Bildfrequenz gearbeitet, da die zeitlich aufeinanderfolgenden Ausleuchtkomponenten an einer einzigen Scheibe durchgeführt werden. Insbesondere bei Hochleistungsschneidemaschinen muss die Nachweiseinrichtung zu einer besonders schnellen Aufnahme und Abspeicherung der Bilddaten in der Lage sein.

Die einzelnen Ausleuchtkomponenten können entweder mit einer einzigen Strahlungsquelle durchgeführt oder auf mehrere räumlich voneinander getrennte Strahlungsquellen verteilt werden. Zum Nachweis der reflektierten Strahlung können anstelle eines einzigen Sensors mehrere Einzelsensoren vorgesehen sein, die jeweils einer Ausleuchtkomponente zugeordnet sind.

Wenn für jeden Erfassungsvorgang mehrere Bilder aufgenommen werden, die jeweils einer oder mehreren Ausleuchtkomponenten zugeordnet sind, werden die Einzelbilder mittels der Steuer- und Auswerteeinrichtung zu einem Gesamtbild zusammengesetzt, das Informationen sowohl über die Kontur als auch über die Struktur des jeweiligen, entweder eine oder mehrere Produktscheiben umfassenden Abschnitts des Produktes enthält.

## Patentansprüche

1. Verfahren zum Aufschneiden von Lebensmittelprodukten mit ungleichmäßiger Innenstruktur, wie z.B. Wurst oder Schinken, bei dem die Produkte (11) in Scheiben (S) geschnitten und insbesondere geschindelte Portionen oder Stapelportionen gebildet und aus dem Aufschneidebereich (31) abtransportiert werden, und bei dem während des Aufschneidens mittels einer optoelektronischen Erfassungseinrichtung in aufeinanderfolgenden Erfassungsvorgängen (E) Informationen über die Kontur und die Struktur der Produktscheiben (S) gewonnen werden, indem der Aufschneidebereich (31) ausgeleuchtet und von den Schnittflächen (13) der jeweils vom Produkt (11) abzutrennenden Scheiben (S) und aus dem Randbereich (15) der Scheiben (S) reflektierte Ausleuchtstrahlung nachgewiesen und ausgewertet wird,
**dadurch gekennzeichnet,**
**dass** in wenigstens einem und bevorzugt in jedem Erfassungsvorgang (E) die Ausleuchtung aus dem - entgegen der Produktförderrichtung gesehen - vor dem Aufschneidebereich gelegenen Halbraum in mehreren richtungsunabhängigen Komponenten (K) durchgeführt wird, die sich zumindest hinsichtlich eines Ausleuchtparameters voneinander unterscheiden.

2. Verfahren zum Aufschneiden von Lebensmittelprodukten mit ungleichmäßiger Innenstruktur, wie z.B. Wurst oder Schinken, bei dem die Produkte (11) in Scheiben (S) geschnitten und insbesondere geschindelte Portionen oder Stapelportionen gebildet und aus dem Aufschneidebereich (31) abtransportiert werden, und bei dem während des Aufschneidens mittels einer optoelektronischen Erfassungseinrichtung in aufeinanderfolgenden Erfassungsvorgängen (E) Informationen über die Kontur und die Struktur der Produktscheiben (S) gewonnen werden, indem der Aufschneidebereich (31) ausgeleuchtet und von den Schnittflächen (13) der jeweils vom Produkt (11) abzutrennenden Scheiben (S) und aus dem Randbereich (15) der Scheiben (S) reflektierte Ausleuchtstrahlung nachgewiesen und ausgewertet wird,
**dadurch gekennzeichnet,**
**dass** in wenigstens einem und bevorzugt in jedem Erfassungsvorgang (E) die Ausleuchtung aus dem - entgegen der Produktförderrichtung gesehen - hinter dem Aufschneidebereich gelegenen Halbraum in mehreren richtungsunabhängigen Komponenten (K) durchgeführt wird, die sich zumindest hinsichtlich eines Ausleuchtparameters voneinander unterscheiden,
wobei der unterscheidende Ausleuchtparameter die Wallenlänge (λ) der verwendeten Strahlung, ein Wellenlägenbereich der verwendeten Strahlung, die Polarisationseigenschaften der verwendeten Strahlung oder der Zeitpunkt, an dem die Ausleuchtkomponenten jeweils durchgeführt werden, ist.

3. Verfahren zum Aufschneiden von Lebensmittelprodukten mit ungleichmäßiger Innenstruktur, wie z.B. Wurst oder Schinken, bei dem die Produkte (11) in Scheiben (S) geschnitten und insbesondere geschindelte Portionen oder Stapelportionen gebildet und aus dem Aufschneidebereich (31) abtransportiert werden, und bei dem während des Aufschneidens mittels einer optoelektronischen Erfassungseinrichtung in aufeinanderfolgenden Erfassungsvorgängen (E) Informationen über die Kontur und die Struktur der Produktscheiben (S) gewonnen werden, indem der Aufschneidebereich (31) ausgeleuchtet und von den Schnittflächen (13) der jeweils vom Produkt (11) abzutrennenden Scheiben (S) und aus dem Randbereich (15) der Scheiben (S) reflektierte Ausleuchtstrahlung nachgewiesen und ausgewertet wird,
**dadurch gekennzeichnet,**
**dass** in wenigstens einem und bevorzugt in jedem Erfassungsvorgang (E) die Ausleuchtung aus dem entgegen der Produktförderrichtung gesehen - vor und hinter dem Aufschneidebereich gelegenen Halbraum in mehreren richtungsunabhängigen Komponenten (K) durchgeführt wird, die sich zumindest hinsichtlich eines Ausleuchtparameters voneinander unterscheiden.

4. Verfahren nach einem der vorhergehenden Ansprüche,
**dadurch gekennzeichnet,**
**dass** zumindest einige Ausleuchtkomponenten (K) gleichzeitig durchgeführt werden.

5. Verfahren nach einem der vorhergehenden Ansprüche,
**dadurch gekennzeichnet,**
**dass** zumindest einige Ausleuchtkomponenten (K) zeitlich nacheinander durchgeführt werden.

6. Verfahren nach einem der vorhergehenden Ansprüche,
**dadurch gekennzeichnet,**
**dass** sich zumindest einige Ausleuchtkomponenten (K) hinsichtlich der Wellenlänge (λ) der verwendeten Strahlung voneinander unterscheiden.

7. Verfahren nach einem der vorhergehenden Ansprüche,
**dadurch gekennzeichnet,**
**dass** die Wellenlängen (λ) in Abhängigkeit von den verschiedenen Produktanteilen (11a, 11b), insbesondere Fettanteil einerseits und Mageranteil andererseits, und/oder davon, ob die Scheibenstruktur oder die Scheibenkontur erfasst werden soll, gewählt werden.

8. Verfahren nach einem der vorhergehenden Ansprüche,
**dadurch gekennzeichnet,**
**dass** sich zumindest einige Ausleuchtkomponenten (K) hinsichtlich der Intensität (I) der verwendeten Strahlung und/ oder hinsichtlich der im jeweils ausgeleuchteten Bereich erzeugten Beleuchtungsstärke voneinander unterscheiden.

9. Verfahren nach einem der vorhergehenden Ansprüche,
**dadurch gekennzeichnet,**
**dass** sich zumindest einige Ausleuchtkomponenten (K) hinsichtlich der Polarisationseigenschaften (P) der verwendeten Strahlung voneinander unterscheiden.

10. Verfahren nach einem der vorhergehenden Ansprüche,
**dadurch gekennzeichnet,**
**dass** der oder jeder Erfassungsvorgang (E) genau eine Produktscheibe (S) umfasst.

11. Verfahren nach einem der Ansprüche 1 bis 9,
**dadurch gekennzeichnet,**
**dass** der oder jeder Erfassungsvorgang (E) mehrere und insbesondere zwei oder drei unmittelbar aufeinanderfolgende Produktscheiben (S) umfasst.

12. Verfahren nach einem der vorhergehenden Ansprüche,
**dadurch gekennzeichnet,**
**dass** an einer oder verschiedenen Produktscheiben (S) gewonnene Teilinformationen zu einer Gesamtinformation über sowohl Kontur als auch Struktur der Produktscheiben (S) zusammengesetzt werden.

13. Verfahren nach einem der vorhergehenden Ansprüche,
**dadurch gekennzeichnet,**
**dass** an einer Produktscheibe (S) Informationen über deren Struktur und an einer anderen Produktscheibe (S) Informationen über deren Kontur gewonnen werden.

14. Verfahren nach einem der vorhergehenden Ansprüche,
**dadurch gekennzeichnet,**
**dass** Informationen über die verschiedenen Produktanteile (11a, 11b), insbesondere Fettanteil einerseits und Mageranteil andererseits, an verschiedenen Produktscheiben (S) gewonnen werden.

15. Verfahren nach einem der vorhergehenden Ansprüche,
**dadurch gekennzeichnet,**
**dass** mehrere und insbesondere alle Ausleuchtkomponenten (K) aus einer einzigen Richtung (R) und insbesondere mittels einer einzigen Strahlungsquelle durchgeführt werden.

16. Verfahren nach einem der vorhergehenden Ansprüche,
**dadurch gekennzeichnet,**
**dass** die Ausleuchtkomponenten (K) aus verschiedenen Richtungen (R) und insbesondere mittels mehrerer räumlich voneinander getrennter Strahlungsquellen (17, 19, 21) durchgeführt werden.

17. Verfahren nach einem der vorhergehenden Ansprüche,
**dadurch gekennzeichnet,**
**dass** zur Erzeugung des Kontrastes zwischen der Schnittfläche (13) und deren Randbereich (15) in letzterem eine höhere Beleuchtungsstärke als auf der Schnittfläche (13) erzeugt wird.

18. Verfahren nach dem Oberbegriff des Anspruchs 1,
**dadurch gekennzeichnet,**
**dass** in wenigstens einem und bevorzugt in jedem Erfassungsvorgang (E) die Ausleuchtung ausschließlich aus dem vor dem Aufschneidebereich (31) gelegenen Halbraum in mehreren Ausleuchtkomponenten (K) aus verschiedenen Richtungen durchgeführt wird.

19. Verfahren nach Anspruch 18 mit den Merkmalen zumindest eines der Anspruche 4 bis 17.

20. Vorrichtung zum Aufschneiden von Lebensmittelprodukten mit ungleichmäßiger Innenstruktur, wie z.B. Wurst oder Schinken, mit der die Produkte (11) in Scheiben (S) geschnitten und insbesondere geschindelte Portionen oder Stapelportionen gebildet und aus dem Aufschneidebereich (31) abtransportiert werden, insbesondere zur Durchführung des Verfahrens nach einem der vorhergehenden Ansprüche, mit
- einer wenigstens eine Strahlungsquelle (17, 19, 21) umfassenden Beleuchtungseinrichtung zum Ausleuchten des Aufschneidebereiches (31),
- einer Nachweiseinrichtung (23) für von den Schnittflächen (13) der jeweils vom Produkt (11) abzutrennenden Scheiben (S) und aus dem Randbereich (15) der Scheiben (S) reflektierte Ausleuchtstrahlung, und
- einer Auswerteeinrichtung (25) zum Auswerten der nachgewiesenen Strahlung,
**dadurch gekennzeichnet,**
**dass** die Beleuchtungseinrichtung zur Erzeugung eines für die Erfassung der Kontur und Struktur der Produktscheiben (S) ausreichenden Kontrastes zwischen der Schnittfläche (13) und deren Randbereich (15) einerseits und zwischen verschiedenen Produktanteilen (11a, 11b) auf der Schnittfläche (13) andererseits derart betreibbar ist, dass in wenigstens einem und bevorzugt in jedem Erfassungsvorgang (E) die Ausleuchtung aus dem - entegegen der Produktförderrichtung gesehen - vor dem Aufschneidebereich gelegenen Halbraum in mehreren richtungsunabhängigen Komponenten (K) durchführbar ist, die sich zumindest hinsichtlich eines Ausleuchtparameters voneinander unterscheiden.

21. Vorrichtung zum Aufschneiden von Lebensmittelprodukten mit ungleichmäßiger Innenstruktur, wie z.B. Wurst oder Schinken, mit der die Produkte (11) in Scheiben (S) geschnitten und insbesondere geschindelte Portionen oder Stapelportionen gebildet und aus dem Aufschneidebereich (31) abtransportiert werden, insbesondere zur Durchführung des Verfahrens nach einem der vorhergehenden Ansprüche, mit
- einer wenigstens eine Strahlungsquelle (17, 19, 21) umfassenden Beleuchtungseinrichtung zum Ausleuchten des Aufschneidebereiches (31),
- einer Nachweiseinrichtung (23) für von den Schnittflächen (13) der jeweils vom Produkt (11) abzutrennenden Scheiben (S) und aus dem Randbereich (15) der Scheiben (S) reflektierte Ausleuchtstrahlung, und
- einer Auswerteeinrichtung (25) zum Auswerten der nachgewiesenen Strahlung,
**dadurch gekennzeichnet,**
**dass** die Beleuchtungseinrichtung zur Erzeugung eines für die Erfassung der Kontur und Struktur der Produktscheiben (S) ausreichenden Kontrastes zwischen der Schnittfläche (13) und deren Randbereich (15) einerseits und zwischen verschiedenen Produktanteilen (11a, 11b) auf der Schnittfläche (13) andererseits derart betreibbar ist, dass in wenigstens einem und bevorzugt in jedem Erfassungsvorgang (E) die Ausleuchtung aus dem - entgegen der Produktförgerrichtung gesehen - hinter dem Aufschneidebereich gelegenen Halbraum in mehreren richtungsunabhängigen Komponenten (K) durchführbar ist, die sich zumindest hinsichtlich eines Ausleuchtparameters voneinander unterscheiden,
wobei der unterscheidende Ausleuchtparameter die Wellenlänge (λ) der verwendeten Strahlung, ein Wellenlängenbereich der verwendeten Strahlung, die Polarisationseigenschaften der verwendeten Strahlung oder der Zeitpunkt, an dem die Ausleuchtkomponenten jeweils durchgeführt werden, ist.

22. Vorrichtung zum Aufschneiden von Lebensmittelprodukten mit ungleichmäßiger Innenstruktur, wie z.B. Wurst oder Schinken, mit der die Produkte (11) in Scheiben (S) geschnitten und insbesondere geschindelte Portionen oder Stapelportionen gebildet und aus dem Aufschneidebereich (31) abtransportiert werden, insbesondere zur Durchführung des Verfahrens nach einem der vorhergehenden Ansprüche, mit
- einer wenigstens eine Strahlungsquelle (17, 19, 21) umfassenden Beleuchtungseinrichtung zum Ausleuchten des Aufschneidebereiches (31),
- einer Nachweiseinrichtung (23) für von den Schnittflächen (13) der jeweils vom Produkt (11) abzutrennenden Scheiben (S) und aus dem Randbereich (15) der Scheiben (S) reflektierte Ausleuchtstrahlung, und
- einer Auswerteeinrichtung (25) zum Auswerten der nachgewiesenen Strahlung,
**dadurch gekennzeichnet,**
**dass** die Beleuchtungseinrichtung zur Erzeugung eines für die Erfassung der Kontur und Struktur der Produktscheiben (S) ausreichenden Kontrastes zwischen der Schnittfläche (13) und deren Randbereich (15) einerseits und zwischen verschiedenen Produktanteilen (11a, 11b) auf der Schnittfläche (13) andererseits derart betreibbar ist, dass in wenigstens einem und bevorzugt in jedem Erfassungsvorgang (E) die Ausleuchtung aus dem - entgegen der Produktförderrichtung gegehen - vor und hinter dem Aufschneidebereich gelegenen Halbraum in mehreren richtungsunabhängigen Komponenten (K) durchführbar ist, die sich zumindest hinsichtlich eines Ausleuchtparameters voneinander unterscheiden.

23. Vorrichtung nach einem der Ansprüche 20 bis 22,
**dadurch gekennzeichnet,**
**dass** mit der Beleuchtungseinrichtung zumindest einige Ausleuchtkomponenten (K) gleichzeitig durchführbar sind.

24. Vorrichtung nach einem der Ansprüche 20 bis 22,
**dadurch gekennzeichnet,**
**dass** mit der Beleuchtungseinrichtung zumindest einige Ausleuchtkomponenten (K) zeitlich nacheinander durchführbar sind.

25. Vorrichtung nach einem der Ansprüche 20 bis 24,
**dadurch gekennzeichnet,**
**dass** die Beleuchtungseinrichtung zur Aussendung von Strahlung verschiedener Wellenlängen (λ) ausgebildet ist.

26. Vorrichtung nach einem der Ansprüche 20 bis 25,
**dadurch gekennzeichnet,**
**dass** die Beleuchtungseinrichtung zur Aussendung von Strahlung verschiedener Intensitäten (I) ausgebildet ist.

27. Vorrichtung nach einem der Ansprüche 20 bis 26,
**dadurch gekennzeichnet,**
**dass** die Beleuchtungseinrichtung zur Aussendung von Strahlung verschiedener Polarisationseigenschaften (P) ausgebildet ist.

28. Vorrichtung nach einem der Ansprüche 20 bis 27,
**dadurch gekennzeichnet,**
**dass** die Beleuchtungseinrichtung genau eine Strahlungsquelle umfasst.

29. Vorrichtung nach einem der Ansprüche 20 bis 27,
**dadurch gekennzeichnet,**
**dass** die Beleuchtungseinrichtung mehrere räumlich voneinander getrennte Strahlungsquellen (17, 19, 21) umfasst.

30. Vorrichtung nach einem der Ansprüche 20 bis 29,
**dadurch gekennzeichnet,**
**dass** wenigstens eine oder jede Strahlungsquelle (17, 19) im vor dem Aufschneidebereich (31) gelegenen Halbraum angeordnet ist.

31. Vorrichtung nach Anspruch 30,
**dadurch gekennzeichnet,**
**dass** wenigstens eine Strahlungsquelle (17) unterhalb-der Produktauflagefläche (27) angeordnet und insbesondere von langgestreckter, quer zur Produktförderrichtung (T) verlaufender Form ist.

32. Vorrichtung nach einem der Ansprüche 20 bis 31,
**dadurch gekennzeichnet,**
**dass** die Beleuchtungseinrichtung einen zumindest teilweise im Aufschneidebereich (31) angeordneten, im Betrieb das Produkt (11) teilweise oder vollständig umgebenden Leuchtrahmen oder Leuchttunnel (21) umfasst.

33. Vorrichtung nach Anspruch 32,
**dadurch gekennzeichnet,**
**dass** die Beleuchtungseinrichtung zusätzlich zu dem Leuchtrahmen oder Leuchttunnel (21) wenigstens eine im vor dem Aufschneidebereich (31) gelegenen Halbraum angeordnete Strahlungsquelle (17, 19) umfasst.

34. Vorrichtung nach einem der Ansprüche 20 bis 33,
**dadurch gekennzeichnet,**
**dass** die Strahlungsquelle (17, 19, 21) zur Veränderung der Beleuchtungsrichtung bewegbar ist.

35. Vorrichtung nach einem der Ansprüche 20 bis 34,
**dadurch gekennzeichnet,**
**dass** die Nachweiseinrichtung (23) zumindest einen Sensor umfasst, der mehreren und insbesondere allen Ausleuchtkomponenten (K) zugeordnet ist.

36. Vorrichtung nach einem der Ansprüche 20 bis 35,
**dadurch gekennzeichnet,**
**dass** wenigstens ein Sensor der Nachweiseinrichtung (23) zum gleichzeitigen Nachweis von Strahlung verschiedener Wellenlängen (λ) ausgebildet und insbesondere in Form einer Farbkamera vorgesehen ist.

37. Vorrichtung nach einem der Ansprüche 20 bis 36,
**dadurch gekennzeichnet,**
**dass** die Nachweiseinrichtung (23) mehrere Einzelsensoren umfasst, die verschiedenen Ausleuchtkomponenten (K) zugeordnet sind.

38. Vorrichtung nach einem der Ansprüche 20 bis 37,
**dadurch gekennzeichnet,**
**dass** Einzelsensoren der Nachweiseinrichtung (23) jeweils in Form einer mit einer Filtereinrichtungen versehenen Schwarz/Weiß-Kamera vorgesehen sind.

39. Vorrichtung nach einem der Ansprüche 20 bis 38,
**dadurch gekennzeichnet,**
**dass** wenigstens ein Sensor der Nachweiseinrichtung (23) entsprechend einer zeitlichen Abfolge von Ausleuchtkomponenten (K) wiederholt auslesbar ist.

40. Vorrichtung nach einem der Ansprüche 20 bis 39,
**dadurch gekennzeichnet,**
**dass** mehrere Einzelsensoren der Nachweiseinrichtung (23) entsprechend einer zeitlichen Abfolge von Ausleuchtkomponenten (K) zeitlich nacheinander auslesbar sind.

41. Vorrichtung nach dem Oberbegriff des Anspruchs 20,
**dadurch gekennzeichnet,**
**dass** die Beleuchtungseinrichtung ausschließlich im vor dem Aufschneidebereich (31) gelegenen Halbraum angeordnete Strahlungsquellen umfasst, mit denen die Ausleuchtung in mehreren Ausleuchtkomponenten (K) aus verschiedenen Richtungen durchführbar ist.

42. Vorrichtung nach Anspruch 41 mit den Merkmalen zumindest eines der Ansprüche 23 bis 40.

## Claims

1. A method for the slicing of food products having an irregular inner structure such as sausage or ham, in which the products (11) are cut into slices (S) and in particular overlapping portions or stacked portions are formed and transported away from the slicing region (31) and in which information is gained on the contour and on the structure of the product slices (S) during slicing by means of an optoelectronic detection device in sequential detection procedures (E), in that the slicing region (31) is illuminated and illuminating radiation reflected from the cut surfaces (13) of the respective slices (S) to be cut off from the product (11) and reflected from the marginal region (15) of the slices (S) is detected and evaluated,
**characterized in that**,
in at least one detection procedure (E), and preferably in each detection procedure (E), the illumination is effected in a plurality of direction-independent components (K),which differ from another at least with respect to one illumination parameter from the half-space disposed in front of the slicing region - viewed opposite to the product transport direction.

2. A method for the slicing of food products having an irregular inner structure such as sausage or ham, in which the products (11) are cut into slices (S) and in particular overlapping portions or stacked portions are formed and transported away from the slicing region (31) and in which information is gained on the contour and on the structure of the product slices (S) during slicing by means of an optoelectronic detection device in sequential detection procedures (E), in that the slicing region (31) is illuminated and illuminating radiation reflected from the cut surfaces (13) of the respective slices (S) to be cut off from the product (11) and reflected from the marginal region (15) of the slices (S) is detected and evaluated,
**characterized in that**,
in at least one detection procedure (E), and preferably in each detection procedure (E), the illumination is effected in a plurality of direction-independent components (K), which differ from another at least with respect to one illumination parameter from the half-space disposed behind the slicing region - viewed opposite to the product transport direction,
wherein the different illumination parameter is the wavelength (λ) of the radiation used, a wavelength range of the radiation used, the polarization properties of the radiation used or the time at which the illumination components has respectively been carried out.

3. A method for the slicing of food products having an irregular inner structure such as sausage or ham, in which the products (11) are cut into slices (S) and in particular overlapping portions or stacked portions are formed and transported away from the slicing region (31) and in which information is gained on the contour and on the structure of the product slices (S) during slicing by means of an optoelectronic detection device in sequential detection procedures (E), in that the slicing region (31) is illuminated and illuminating radiation reflected from the cut surfaces (13) of the respective slices (S) to be cut off from the product (11) and reflected from the marginal region (15) of the slices (S) is detected and evaluated,
**characterized in that**,
in at least one detection procedure (E), and preferably in each detection procedure (E), the illumination is effected in a plurality of direction-independent components (K), which differ from another at least with respect to one illumination parameter from the half-space disposed in front of and behind the slicing region - viewed opposite to the product transport direction.

4. A method in accordance with any one of the preceding claims, **characterized in that** at least some illumination components (K) are effected simultaneously.

5. A method in accordance with any one of the preceding claims, **characterized in that** at least some illumination components (K) are effected after one another timewise.

6. A method in accordance with any one of the preceding claims, **characterized in that** at least some illumination components (K) differ from one another with respect to the wavelength (λ) of the radiation used.

7. A method in accordance with any one of the preceding claims, **characterized in that** the wavelengths (λ) are selected in dependence on the different components of the product (11a, 11b), in particular on the fat component, on the one hand, and on the lean component, on the other hand, and/or on whether the slice structure or the slice contour should be detected.

8. A method in accordance with any one of the preceding claims, **characterized in that** at least some illumination components (K) differ from one another with respect to the intensity (I) of the radiation used and/or with respect to the intensity of illumination produced in the respectively illuminated region.

9. A method in accordance with any one of the preceding claims, **characterized in that** at least some illumination components (K) differ from one another with respect to the polarization properties (P) of the radiation used.

10. A method in accordance with any one of the preceding claims, **characterized in that** the or each detection procedure (E) includes precisely one product slice (S).

11. A method in accordance with any one of the claims 1 to 9, **characterized in that** the or each detection procedure (E) includes a plurality, and in particular two or three directly sequential product slices (S).

12. A method in accordance with any one of the preceding claims, **characterized in that** pieces of information gained at one or different product slices (S) are put together to form joint information on both the contour and the structure of the product slices (S).

13. A method in accordance with any one of the preceding claims, **characterized in that** information is gained on one product slice (S) about its structure and on another product slice (S) about its contour.

14. A method in accordance with any one of the preceding claims, **characterized in that** information is gained on the different components of the product (11a, 11b), in particular on the fat component, on the one hand, and on the lean component, on the other hand, on different product slices (S).

15. A method in accordance with any one of the preceding claims, **characterized in that** a plurality of illumination components (K), and in particular all illumination components (K), are effected from a single direction (R) and in particular by means of a single radiation source.

16. A method in accordance with any one of the preceding claims, **characterized in that** the illumination components (K) are effected from different directions (R) and in particular by means of a plurality of radiation sources (17, 19, 21) spatially separated from one another.

17. A method in accordance with any one of the preceding claims, **characterized in that**, for the production of the contrast between the cut surface (13) and its marginal region (15), a higher intensity of illumination is produced in the latter than on the cut surface (13).

18. A method in accordance with the preamble of claim 1, **characterized in that** in at least one detection procedure (E), and preferably in every detection procedure (E), the illumination is effected only from the half space disposed in front of the slicing region (31) in a plurality of illumination components (K) from different directions.

19. A method in accordance with claim 18 having the features of at least one of the claims 4 to 17.

20. An apparatus for the slicing of food products having an irregular inner structure such as sausage or ham, with which the products (11) are cut into slices (S) and in particular overlapping portions or stacked portions are formed and transported away from the slicing region (31), in particular for the effecting of the method in accordance with any one of the previous claims, comprising
- a lighting device including at least one radiation source (17, 19, 21) for the illumination of the slicing region (31),
- a detection device (23) for illuminating radiation reflected from the cut surfaces (13) of the respective slices (S) to be cut off from the product (11) and reflected from the marginal region (15) of the slices (S), and
- an evaluation device (25) for the evaluation of the detected radiation,
**characterized in that**
the lighting device is operable for the production of a contrast sufficient for the detection of the contour and of the structure of the product slices (S) between the cut surface (13) and its marginal region (15), on the one hand, and between different portions of the product (11a, 11b) on the cut surface (13), on the other hand, such that the illumination can be effected in at least one detection procedure (E), and preferably in each detection procedure (E), in a plurality of detection-independent components (K), which differ from one another at least with respect to one illumination parameter from the half-space disposed in front of the slicing region - viewed opposite to the product transport direction.

21. An apparatus for the slicing of food products having an irregular inner structure such as sausage or ham, with which the products (11) are cut into slices (S) and in particular overlapping portions or stacked portions are formed and transported away from the slicing region (31), in particular for the effecting of the method in accordance with any one of the previous claims, comprising
- a lighting device including at least one radiation source (17, 19, 21) for the illumination of the slicing region (31),
- a detection device (23) for illuminating radiation reflected from the cut surfaces (13) of the respective slices (S) to be cut off from the product (11) and reflected from the marginal region (15) of the slices (S), and
- an evaluation device (25) for the evaluation of the detected radiation,
**characterized in that**
the lighting device is operable for the production of a contrast sufficient for the detection of the contour and of the structure of the product slices (S) between the cut surface (13) and its marginal region (15), on the one hand, and between different portions of the product (11a, 11b) on the cut surface (13), on the other hand, such that the illumination can be effected in at least one detection procedure (E), and preferably in each detection procedure (E), in a plurality of detection-independent components (K), which differ from one another at least with respect to one illumination parameter from the half-space disposed behind the slicing region - viewed opposite to the product transport direction,
wherein the different illumination parameter is the wavelength (λ) of the radiation used, a wavelength range of the radiation used, the polarization properties of the radiation used or the time at which the illumination components is respectively carried out.

22. An apparatus for the slicing of food products having an irregular inner structure such as sausage or ham, with which the products (11) are cut into slices (S) and in particular overlapping portions or stacked portions are formed and transported away from the slicing region (31), in particular for the effecting of the method in accordance with any one of the previous claims, comprising
- a lighting device including at least one radiation source (17, 19, 21) for the illumination of the slicing region (31),
- a detection device (23) for illuminating radiation reflected from the cut surfaces (13) of the respective slices (S) to be cut off from the product (11) and from the marginal region (15) of the slices (S), and
- an evaluation device (25) for the evaluation of the detected radiation,
**characterized in that**
the lighting device is operable for the production of a contrast sufficient for the detection of the contour and of the structure of the product slices (S) between the cut surface (13) and its marginal region (15), on the one hand, and between different portions of the product (11a, 11b) on the cut surface (13), on the other hand, such that the illumination can be effected in at least one detection procedure (E), and preferably in each detection procedure (E), in a plurality of detection-independent components (K), which differ from one another at least with respect to one illumination parameter from the half-space disposed in front of and behind the slicing region - viewed opposite to the product transport direction.

23. An apparatus in accordance with any one of the claims 20 to 22, **characterized in that** at least some illumination components (K) can be effected simultaneously using the lighting device.

24. An apparatus in accordance with any one of the claims 20 to 22, **characterized in that** at least some illumination components (K) can be effected after one another timewise using the lighting device.

25. An apparatus in accordance with any one of the claims 20 to 24, **characterized in that** the lighting device is made for the transmission of radiation of different wavelengths (λ).

26. An apparatus in accordance with any one of the claims 20 to 25, **characterized in that** the lighting device is made for the transmission of radiation of different intensities (I).

27. An apparatus in accordance with any one of the claims 20 to 26, **characterized in that** the lighting device is made for the transmission of radiation of different polarization properties (P).

28. An apparatus in accordance with any one of the claims 20 to 27, **characterized in that** the lighting device includes precisely one radiation source.

29. An apparatus in accordance with any one of the claims 20 to 27, **characterized in that** the lighting device includes a plurality of radiation sources (17, 19, 21) spatially separate from one another.

30. An apparatus in accordance with any one of the claims 20 to 29, **characterized in that** at least one radiation source (17, 19), or each radiation source (17, 19) is arranged in the half space disposed in front of the slicing region (31).

31. An apparatus in accordance with claim 30, **characterized in that** at least one radiation source (17) is arranged beneath the product support surface (27) and is in particular of an elongate shape extending transversely to the product conveying direction (T).

32. An apparatus in accordance with any one of the claims 20 to 31, **characterized in that** the lighting device includes a luminous frame or luminous tunnel (21) arranged at least partly in the slicing region (31) and partly or fully surrounding the product (11) in operation.

33. An apparatus in accordance with claim 32, **characterized in that** the lighting device includes, in addition to the luminous frame or luminous tunnel (21), at least one radiation source (17, 19) arranged in the half space disposed in front of the slicing region (31).

34. An apparatus in accordance with any one of the claims 20 to 33, **characterized in that** the radiation source (17, 19, 21) is movable for the changing of the lighting direction.

35. An apparatus in accordance with any one of the claims 20 to 34, **characterized in that** the detection device (23) includes at least one sensor which is associated with a plurality of illumination components (K) and in particular with all illumination components (K).

36. An apparatus in accordance with any one of the claims 20 to 35, **characterized in that** at least one sensor of the detection device (23) is provided for the simultaneous detection of radiation of different wavelengths (λ) and is in particular provided in the form of a color camera.

37. An apparatus in accordance with any one of the claims 20 to 36, **characterized in that** the detection device (23) includes a plurality of individual sensors which are associated with different illumination components (K).

38. An apparatus in accordance with any one of the claims 20 to 37, **characterized in that** individual sensors of the detection device (23) are provided in each case in the form of a black and white camera provided with filter devices.

39. An apparatus in accordance with any one of the claims 20 to 38, **characterized in that** at least one sensor of the detection device (23) can be read out repeatedly in accordance with a time sequence of illumination components (K).

40. An apparatus in accordance with any one of the claims 20 to 39, **characterized in that** a plurality of individual sensors of the detection device (23) can be read out after one another timewise in accordance with a time sequence of illumination components (K).

41. An apparatus in accordance with the preamble of claim 20, **characterized in that** the illumination device exclusively comprises radiation sources which are arranged in the half space disposed in front of the slicing region (31) and with which the illumination can be effected in a plurality of illumination components (K) from different directions.

42. An apparatus in accordance with claim 41 having the features of at least one of the claims 23 to 40.

## Revendications

1. Procédé pour découper des produits alimentaires présentant une structure intérieure irrégulière, comme par exemple de la saucisse ou du jambon, dans lequel les produits (11) sont coupés en tranches (S) et en particulier en portions en écailles ou en portions empilées et transportés en éloignement de la zone de découpe (31), et dans lequel, pendant la découpe, des informations sur le contour et sur la structure des tranches de produit (S) sont récupérées au moyen d'un dispositif de détection optoélectronique dans des opérations de détection successives (E) du fait que la zone de découpe (31) est illuminée et le rayonnement lumineux réfléchi par les surfaces de coupe (13) des tranches respectives (S) à couper du produit (11) et par la zone de bord (15) des tranches (S) est décelé et évalué,
**caractérisé en ce que**
dans au moins une et de préférence dans chaque opération de détection (E), l'illumination est mise en oeuvre à partir du demi-espace situé en avant de la zone de découpe, vue en sens opposé à la direction de transport de produit, en plusieurs composantes (K) indépendantes de la direction qui se distinguent les unes des autres au moins à l'égard d'un paramètre d'illumination.

2. Procédé pour découper des produits alimentaires présentant une structure intérieure irrégulière, comme par exemple de la saucisse ou du jambon, dans lequel les produits (11) sont coupés en tranches (S) et en particulier en portions en écailles ou en portions empilées et transportés en éloignement de la zone de découpe (31), et dans lequel, pendant la découpe, des informations sur le contour et sur la structure des tranches de produit (S) sont récupérées au moyen d'un dispositif de détection optoélectronique dans des opérations de détection successives (E) du fait que la zone de découpe (31) est illuminée et le rayonnement lumineux réfléchi par les surfaces de coupe (13) des tranches respectives (S) à couper du produit (11) et par la zone de bord (15) des tranches (S) est décelé et évalué,
**caractérisé en ce que**
dans au moins une et de préférence dans chaque opération de détection (E), l'illumination est mise en oeuvre à partir du demi-espace situé en arrière de la zone de découpe, vue en sens opposé à la direction de transport de produit, en plusieurs composantes (K) indépendantes de la direction qui se distinguent les unes des autres au moins à l'égard un paramètre d'illumination,
et **en ce que** le paramètre d'illumination différent est la longueur d'onde (λ) du rayonnement utilisé, une plage de longueur d'onde du rayonnement utilisé, les propriétés de polarisation du rayonnement utilisé ou l'instant auquel les composantes d'illumination respectives sont mises en oeuvre.

3. Procédé pour découper des produits alimentaires présentant une structure intérieure irrégulière, comme par exemple de la saucisse ou du jambon, dans lequel les produits (11) sont coupés en tranches (S) et en particulier en portions en écailles ou en portions empilées et transportés en éloignement de la zone de découpe (31), et dans lequel, pendant la découpe, des informations sur le contour et sur la structure des tranches de produit (S) sont récupérées au moyen d'un dispositif de détection optoélectronique dans des opérations de détection successives (E) du fait que la zone de découpe (31) est illuminée et le rayonnement lumineux réfléchi par les surfaces de coupe (13) des tranches respectives (S) à couper du produit (11) et par la zone de bord (15) des tranches (S) est décelé et évalué,
**caractérisé en ce que**
dans au moins une et de préférence dans chaque opération de détection (E), l'illumination est mise en oeuvre à partir du demi-espace situé en avant et en arrière de la zone de découpe, vue en sens opposé à la direction de transport de produit, en plusieurs composantes (K) indépendantes de la direction qui se distinguent les unes des autres au moins à l'égard d'un paramètre d'illumination.

4. Procédé selon l'une des revendications précédentes,
**caractérisé en ce que**
au moins quelques-unes des composantes d'illumination (K) sont mises en oeuvre simultanément.

5. Procédé selon l'une des revendications précédentes,
**caractérisé en ce que**
au moins quelques-unes des composantes d'illumination (K) sont mises en oeuvre temporellement les unes après les autres.

6. Procédé selon l'une des revendications précédentes,
**caractérisé en ce que**
au moins quelques-unes des composantes d'illumination (K) se distinguent les unes des autres par rapport à la longueur d'onde (λ) du rayonnement utilisé.

7. Procédé selon l'une des revendications précédentes,
**caractérisé en ce que**
les longueurs d'onde (λ) sont choisies en fonction des différentes parts de produit (11a, 11b), en particulier de la part de matière graisseuse d'une part et de la part de matière maigre d'autre part et/ou en fonction de savoir si l'on cherche à détecter la structure de tranche ou le contour de tranche.

8. Procédé selon l'une des revendications précédentes,
**caractérisé en ce que**
au moins quelques-unes des composantes d'illumination (K) se distinguent par rapport à l'intensité (I) du rayonnement utilisé et/ou par rapport à l'intensité d'illumination générée dans la zone illuminée respective.

9. Procédé selon l'une des revendications précédentes,
**caractérisé en ce que**
au moins quelques-unes des composantes d'illumination (K) se distinguent par rapport aux propriétés de polarisation (P) du rayonnement utilisé.

10. Procédé selon l'une des revendications précédentes,
**caractérisé en ce que**
la ou chaque opération de détection (E) concerne précisément une tranche de produit (S).

11. Procédé selon l'une des revendications 1 à 9,
**caractérisé en ce que**
la ou chaque opération de détection (E) concerne plusieurs et en particulier deux ou trois tranches de produit (S) immédiatement successives.

12. Procédé selon l'une des revendications précédentes,
**caractérisé en ce que**
les informations partielles récupérées sur une ou sur diverses tranches de produit (S) sont assemblées en une information globale aussi bien sur le contour que sur la structure des tranches de produit (S).

13. Procédé selon l'une des revendications précédentes,
**caractérisé en ce que**
sur une tranche de produit (S) on récupère des informations sur sa structure, et sur une autre tranche de produit (S) on récupère des informations sur son contour.

14. Procédé selon l'une des revendications précédentes,
**caractérisé en ce que**
les informations sur les différentes parts de produit (11a, 11b), en particulier sur la part de matière graisseuse d'une part et sur la part de matière maigre d'autre part, sont récupérées sur des tranches de produit différentes (S).

15. Procédé selon l'une des revendications précédentes,
**caractérisé en ce que**
plusieurs et en particulier toutes les composantes d'illumination (K) sont mises en oeuvre depuis une seule direction (R) et en particulier au moyen d'une seule source de rayonnement.

16. Procédé selon l'une des revendications précédentes,
**caractérisé en ce que**
les composantes d'illumination (K) sont mises en oeuvre depuis différentes directions (R) et en particulier au moyen de plusieurs sources de rayonnement (17, 19, 21) séparées dans l'espace les unes des autres.

17. Procédé selon l'une des revendications précédentes,
**caractérisé en ce que**
pour générer un contraste entre la surface de coupe (13) et sa zone de bord (15), on génère dans cette dernière une intensité d'illumination plus élevée que celle sur la surface de coupe (13).

18. Procédé selon le préambule de la revendication 1,
**caractérisé en ce que**
dans au moins une et de préférence dans chaque opération de détection (E), l'illumination est mise en oeuvre exclusivement à partir du demi-espace situé en avant de la zone de découpe (31) en plusieurs composantes d'illumination (K) depuis différentes directions.

19. Procédé selon la revendication 18, présentant les caractéristiques de l'une au moins des revendications 4 à 17.

20. Appareil pour découper des produits alimentaires présentant une structure intérieure irrégulière, comme par exemple de la saucisse ou du jambon, au moyen duquel les produits (11) sont coupés en tranches (S) et en particulier en portions en écailles ou en portions empilées et transportés en éloignement de la zone de découpe (31), en particulier pour mettre en oeuvre le procédé selon l'une des revendications précédentes, comportant
- un dispositif d'illumination destiné à illuminer la zone de découpe (31) et comprenant au moins une source de rayonnement (17, 19, 21),
- un dispositif de décèlement (23) pour le rayonnement d'illumination réfléchi par les surfaces de coupe (13) des tranches (S) à couper du produit (11) et par la zone de bord (15) des tranches (S), et
- un dispositif d'évaluation (25) pour évaluer le rayonnement décelé,
**caractérisé en ce que**
le dispositif d'illumination, pour générer un contraste suffisant pour la détection du contour et de la structure des tranches de produit (S) entre la surface de coupe (13) et sa zone de bord (15) d'une part et entre différentes parts de produit (11a, 11b) sur la surface de coupe (13) d'autre part, peut fonctionner de telle sorte qu'au moins dans une et de préférence dans chaque opération de détection (E), l'illumination est mise en oeuvre à partir du demi-espace situé en avant de la zone de découpe, vue en sens opposé à la direction de transport de produit, en plusieurs composantes (K) indépendantes de la direction qui se distinguent les unes des autres au moins à l'égard d'un paramètre d'illumination.

21. Appareil pour découper des produits alimentaires présentant une structure intérieure irrégulière, comme par exemple de la saucisse ou du jambon, au moyen duquel les produits (11) sont coupés en tranches (S) et en particulier en portions en écailles ou en portions empilées et transportés en éloignement de la zone de découpe (31), en particulier pour mettre en oeuvre le procédé selon l'une des revendications précédentes, comportant
- un dispositif d'illumination destiné à illuminer la zone de découpe (31) et comprenant au moins une source de rayonnement (17, 19, 21),
- un dispositif de décèlement (23) pour le rayonnement d'illumination réfléchi par les surfaces de coupe (13) des tranches (S) à couper du produit (11) et par la zone de bord (15) des tranches (S), et
- un dispositif d'évaluation (25) pour évaluer le rayonnement décelé,
**caractérisé en ce que**
le dispositif d'illumination, pour générer un contraste suffisant pour la détection du contour et de la structure des tranches de produit (S) entre la surface de coupe (13) et sa zone de bord (15) d'une part et entre différentes parts de produit (11a, 11b) sur la surface de coupe (13) d'autre part, peut fonctionner de telle sorte qu'au moins dans une et de préférence dans chaque opération de détection (E), l'illumination est mise en oeuvre à partir du demi-espace situé en arrière de la zone de découpe, vue en sens opposé à la direction de transport de produit, en plusieurs composantes (K) indépendantes de la direction qui se distinguent les unes des autres au moins à l'égard d'un paramètre d'illumination,
le paramètre d'illumination différent étant la longueur d'onde (λ) du rayonnement utilisé, une plage de longueur d'onde du rayonnement utilisé, les propriétés de polarisation du rayonnement utilisé ou l'instant auquel les composantes d'illumination respectives sont mises en oeuvre.

22. Appareil pour découper des produits alimentaires présentant une structure intérieure irrégulière, comme par exemple de la saucisse ou du jambon, au moyen duquel les produits (11) sont coupés en tranches (S) et en particulier en portions en écailles ou en portions empilées et transportés en éloignement de la zone de découpe (31), en particulier pour mettre en oeuvre le procédé selon l'une des revendications précédentes, comportant
- un dispositif d'illumination destiné à illuminer la zone de découpe (31) et comprenant au moins une source de rayonnement (17, 19, 21),
- un dispositif de décèlement (23) pour le rayonnement d'illumination réfléchi par les surfaces de coupe (13) des tranches (S) à couper du produit (11) et par la zone de bord (15) des tranches (S), et
- un dispositif d'évaluation (25) pour évaluer le rayonnement décelé,
**caractérisé en ce que**
le dispositif d'illumination, pour générer un contraste suffisant pour la détection du contour et de la structure des tranches de produit (S) entre la surface de coupe (13) et sa zone de bord (15) d'une part et entre différentes parts de produit (11a, 11b) sur la surface de coupe (13) d'autre part, peut fonctionner de telle sorte qu'au moins dans une et de préférence dans chaque opération de détection (E), l'illumination est mise en oeuvre à partir du demi-espace situé en avant et en arrière de la zone de découpe, vue en sens opposé à la direction de transport de produit, en plusieurs composantes (K) indépendantes de la direction qui se distinguent les unes des autres au moins à l'égard d'un paramètre d'illumination.

23. Appareil selon l'une des revendications 20 à 22,
**caractérisé en ce que**
au moins quelques-unes des composantes d'illumination (K) sont susceptibles d'être mises en oeuvre simultanément.

24. Appareil selon l'une des revendications 20 à 22,
**caractérisé en ce que**
au moins quelques-unes des composantes d'illumination (K) sont mises en oeuvre temporellement les unes après les autres.

25. Appareil selon l'une des revendications 20 à 24,
**caractérisé en ce que**
le dispositif d'illumination est réalisé pour émettre un rayonnement de différentes longueurs d'onde (λ).

26. Appareil selon l'une des revendications 20 à 25,
**caractérisé en ce que**
le dispositif d'illumination est réalisé pour émettre un rayonnement de différentes intensités (I).

27. Appareil selon l'une des revendications 20 à 26,
**caractérisé en ce que**
le dispositif d'illumination est réalisé pour émettre un rayonnement de différentes propriétés de polarisation (P).

28. Appareil selon l'une des revendications 20 à 27,
**caractérisé en ce que**
le dispositif d'illumination comprend précisément une source de rayonnement.

29. Appareil selon l'une des revendications 20 à 27,
**caractérisé en ce que**
le dispositif d'illumination comprend plusieurs sources de rayonnement (17, 19, 21) séparées dans l'espace les unes des autres.

30. Appareil selon l'une des revendications 20 à 29,
**caractérisé en ce que**
au moins une ou chaque source de rayonnement (17, 19) est agencée dans le demi-espace situé en avant de la zone de découpe (31).

31. Appareil selon la revendication 30,
**caractérisé en ce que**
au moins une source de rayonnement (17) est agencée au-dessous de la surface de support de produit (27) et présente en particulier une forme allongée s'étendant transversalement à la direction de transport de produit (T).

32. Appareil selon l'une des revendications 20 à 31,
**caractérisé en ce que**
le dispositif d'illumination comprend au moins un cadre lumineux ou un tunnel lumineux (21) agencé au moins partiellement dans la zone de découpe (31) et entourant partiellement ou complètement le produit (11) pendant le fonctionnement.

33. Appareil selon la revendication 32,
**caractérisé en ce que**
le dispositif d'illumination comprend en supplément au cadre lumineux ou au tunnel lumineux (21) au moins une source de rayonnement (17, 19) agencée dans le demi-espace situé en avant de la zone de découpe (31).

34. Appareil selon l'une des revendications 20 à 33,
**caractérisé en ce que**
la source de rayonnement (17, 19, 21) est mobile pour modifier la direction d'illumination.

35. Appareil selon l'une des revendications 20 à 34,
**caractérisé en ce que**
le dispositif de décèlement (23) comprend au moins un détecteur qui est associé à plusieurs et en particulier à toutes les composantes d'illumination (K).

36. Appareil selon l'une des revendications 20 à 35,
**caractérisé en ce que**
au moins un détecteur du dispositif de décèlement (23) est réalisé pour le décèlement simultané d'un rayonnement de différentes longueurs d'onde (λ) et en particulier sous la forme d'un appareil de prise de vue en couleurs.

37. Appareil selon l'une des revendications 20 à 36,
**caractérisé en ce que**
le dispositif de décèlement (23) comprend plusieurs détecteurs individuels qui sont associés à différentes composantes d'illumination (K).

38. Appareil selon l'une des revendications 20 à 37,
**caractérisé en ce que**
des détecteurs individuels du dispositif de décèlement (23) sont prévus chacun sous la forme d'un appareil de prise de vue en noir et blanc pourvu d'un moyen de filtrage.

39. Appareil selon l'une des revendications 20 à 38,
**caractérisé en ce que**
au moins un détecteur du dispositif de décèlement (23) est susceptible d'être lu à répétition en correspondance d'une succession temporelle de composantes d'illumination (K).

40. Appareil selon l'une des revendications 20 à 39,
**caractérisé en ce que**
plusieurs détecteurs individuels du dispositif de décèlement (23) sont susceptibles d'être lus temporellement les uns après les autres en correspondance d'une succession temporelle de composantes d'illumination (K).

41. Appareil selon le préambule de la revendication 20,
**caractérisé en ce que**
le dispositif d'illumination comprend des sources de rayonnement agencées exclusivement dans le demi-espace situé en avant de la zone de découpe (31), par lesquelles l'illumination peut être mise en oeuvre en plusieurs composantes d'illumination (K) depuis différentes directions.

42. Appareil selon la revendication 41 comportant les caractéristiques de l'une au moins des revendications 23 à 40.
